# EUROPEAN PATENT SPECIFICATION

(11) **EP 2 864 609 B1**
(45) Date of publication and mention of the grant of the patent: **13.02.2019**
(21) Application number: 13759581.5
(22) Date of filing: 21.06.2013
(51) Int. Cl.: F02B 67/06, F16H 7/12

(54) **ACTUATED TENSIONER FOR AN ACCESSORY DRIVE**
BETÄTIGTE SPANNVORRICHTUNG FÜR EINEN HILFSANTRIEB
TENDEUR ACTIONNÉ POUR UN ENTRAÎNEMENT D'ACCESSOIRE

(30) Priority: 21.06.2012 IT TO20120547
(43) Date of publication of application: 29.04.2015
(73) Proprietor: Dayco Europe S.R.L., Chieti (IT)
(72) Inventor: CARICCIA, Gianluca, I-09170 Oristano (IT); LICATA, Federico Domenico, I-10131 Torino (IT); NOE, Etienne, I-66100 Chieti (IT)
(74) Representative: Franzolin, Luigi
(86) International application number: PCT/IB2013/055123
(87) International publication number: WO 2013/190524

(56) References cited:
- EP-A1- 1 464 870
- WO-A1-2005/038298
- WO-A1-2006/005737
- DE-A1- 10 118 277

## Description

### TECHNICAL FIELD

The present invention refers to an actuated tensioner, in particular for a belt accessory drive of an internal combustion engine of a vehicle.

### BACKGROUND ART

In an accessory drive, the load applied during start-up of the internal combustion engine is critical because highly irregular dynamic stress induces high tension oscillations in the belt. A traditional spring tensioner is sized to guarantee correct tensioning in said conditions but during less severe conditions, for example when the vehicle is running, the tensioner load is high and in particular excessive with respect to the operating conditions.

Furthermore, also in a start-stop accessory drive, the start-up condition is critical. In fact, the rotation direction does not change during each operating condition but the torque transmitted is inverted when the internal combustion engine drives the belt and when the belt is driven by a motor generator connected to the drive in order to start the internal combustion engine.

When the torque acting on the belt is inverted, a tight branch of the belt drive can become loose and vice versa and the belt tension must be checked to prevent slipping during all the operating conditions of the drive and in particular of the transients.

In any case if not strictly necessary, it is preferable not to increase the belt tension to prevent unnecessary overloads on the bearings of the accessories controlled by the accessory drive and to reduce the consequent dissipations in order to obtain energy saving.

It is furthermore preferable for a tensioner able to meet the above needs to have a compact and reliable structure.

DE-A1-10118277 discloses a tensioner having a motor and a spring acting on a pivoting arm carrying a pulley. In particular the motor is actuated to change the pre-load of the spring.

### DISCLOSURE OF INVENTION

The object of the present invention is to produce a tensioner able to meet at least partly the above needs.

The object of the present invention is achieved by means of a tensioner according to claim 1.

### BRIEF DESCRIPTION OF THE DRAWINGS

For a better understanding of the present invention, some preferred embodiments, provided purely by way of explanatory non-limiting example, will now be illustrated with reference to the accompanying drawings (not to scale), in which:
- figure 1 is a perspective view with details in section of a first embodiment of the present invention;
- figure 2 is a second perspective view of the tensioner of figure 1 with details removed for clarity;
- figure 3 is a perspective view of the tensioner of figure 1;
- figure 4 is a front view of a drive having a tensioner according to the present invention; and
- figure 5 is a perspective view of a tensioner according to a further embodiment of the present invention.

### BEST MODE FOR CARRYING OUT THE INVENTION

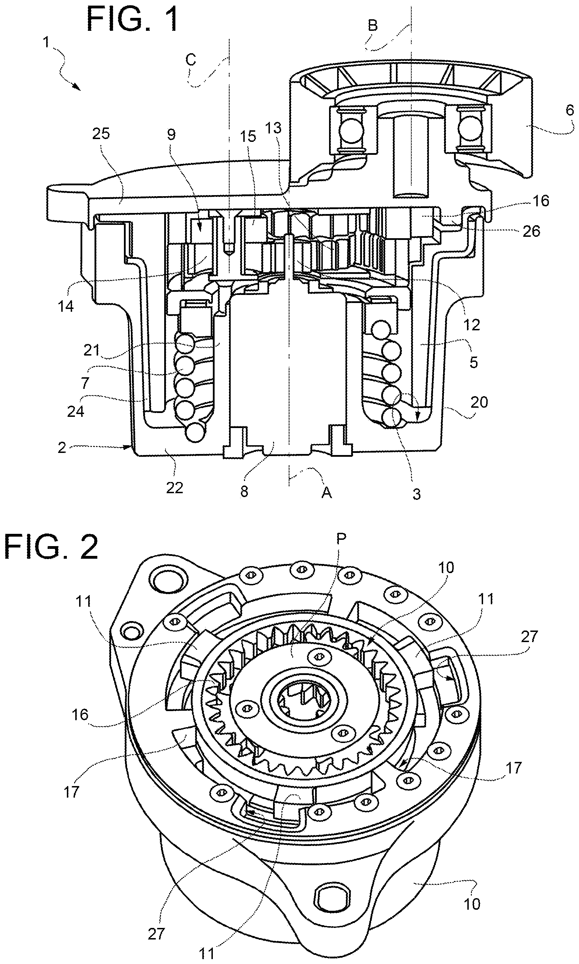

In figure 1, the number 1 illustrates, as a whole, a tensioner comprising a base body 2 defining a cavity 3, a pivoting support 4 having a portion 5 housed in the cavity 3 to rotate about an axis A and a pulley 6 mounted on the support 4 and rotating idle about an axis B spaced from the axis A. The tensioner 1 furthermore comprises a spring 7 acting on the support 4 to apply a torque and tension a belt of a start-stop accessory drive of an internal combustion engine (not illustrated), a rotary motor 8 housed in the cavity 3 with the spring 7, and a gear 9 to control a thrust element 10 selectively contacting the support 4. In particular, the thrust element 10 can only delimit the maximum angular displacement of the support 4 in the direction of loading of the spring 7 and, alternatively or in combination, apply a torque to the additional support 4 with respect to that of the spring 7 to increase the tension of the belt. In particular, the thrust element 10 can comprise a plurality of projections 11 preferably angularly equidistant and rotated in both rotation directions by means of the gear 9 operated by means of the motor 8.

Preferably, the gear 9 is planetary to obtain a high gearing down or reduction of the number of revolutions of the motor 8 and can have two reduction stages. A first reduction stage comprises a sun gear 12 revolving about the axis A, planet gears 13 meshing with the sun gear 12 and an outer ring 14 connected by non-free rotation to the body 2, for example rigidly. A second reduction stage comprises further planet gears 15 rotated by the planet gears 13 and a rotating ring 16 which meshes with the planet gears 15 and controls rotation of the projections 11. The projections 11 selectively contact corresponding abutments 17 of the support 4 to define the maximum angular displacement and/or to apply an additional torque to that of the spring 7. The rotating ring 16 is furthermore centred around the axis A by means of the planet gears 15 each of which is preferably rigidly connected to a respective planet gear 13. Preferably, the planet gears 13 and 15 are rotated about the axis A by a carrier P defining a respective axis C for each pair having a planet gear 13 and a planet gear 15. Even more preferably, the outer ring 14 is axially interposed between the rotating ring 16 and the motor 8. Advantageously, the planet gears 13, 15 are rigidly connected also in an axial direction to the carrier P to define a pre-assembly pack with a configuration such as to be assembled after the sun gear 12 and the outer ring 14.

Advantageously, the support 4 comprises shaped projections each of which defines at least one abutment 17.

The gear 9 previously described is irreversible to maintain a pre-determined angular position of the projections 11 also in the absence of electricity supplied to the motor 8 and in the presence of an action of the support 4 following an increase in the belt tension while the projections 11 are in contact against the abutments 17.

According to the embodiment illustrated in figure 1, the body 2 comprises a tapered wall 20 converging on the opposite side of the gear 9 and a cylindrical wall 21 coaxial with the axis A and concentric to the tapered wall 20 to define a seat for the motor 8 inside the cavity 3. In particular, the motor 8 is closed axially in the cylindrical wall 21 by means of a cover 22 fixed to a base flange 23 of the body 2 which connects the cylindrical wall 21 to the tapered wall 20 on the opposite axial side of the gear 9. In this way, the motor 8 and the spring 7 are on the same axial side with respect to the gear 9.

The portion 5 of the support 4 is also tapered and couples with the tapered wall 20 by means of a coupling 24 to close the axial play and reduce the friction when the support 4 rotates with respect to the body 2. In particular, the radial centring of the support 4 for the rotation about the axis A is defined by the combination of the tapered wall 20 and the coupling 24 or by the sole tapered wall 20. Furthermore, the gear 9 is housed in the support 4, i.e. the support 4 surrounds the gear 9, and also the spring 7 comprises loops which have a radial dimension smaller than those of the portion 5 but greater than that of the motor 8.

The support 4 furthermore axially covers the gear 9 by means of a head wall 25 illustrated in figure 1. The head wall 25 combined with the body 2 closes the gear 9 in a volume protected from contamination by external agents so as to guarantee a prolonged working life of the gear. In particular, the head wall 25 is rigidly connected to the portion 5, for example by means of a riveted connection, and bears the pulley 6. Furthermore, the head wall 25 has a plurality of projections 26 parallel to the axis B and arranged on the opposite axial side of the pulley 6. The projections 26 couple in respective slots 27 defined by the portion 5 near the abutments 17 to define a torsionally rigid coupling with the portion 5. The rivets couple in an axial direction the head wall 25 and the portion 5 of the support 4 while the torque is transmitted by the thrust element 10 to the pulley 6 substantially by means of a form and force fit between the slots 27 and the projections 26.

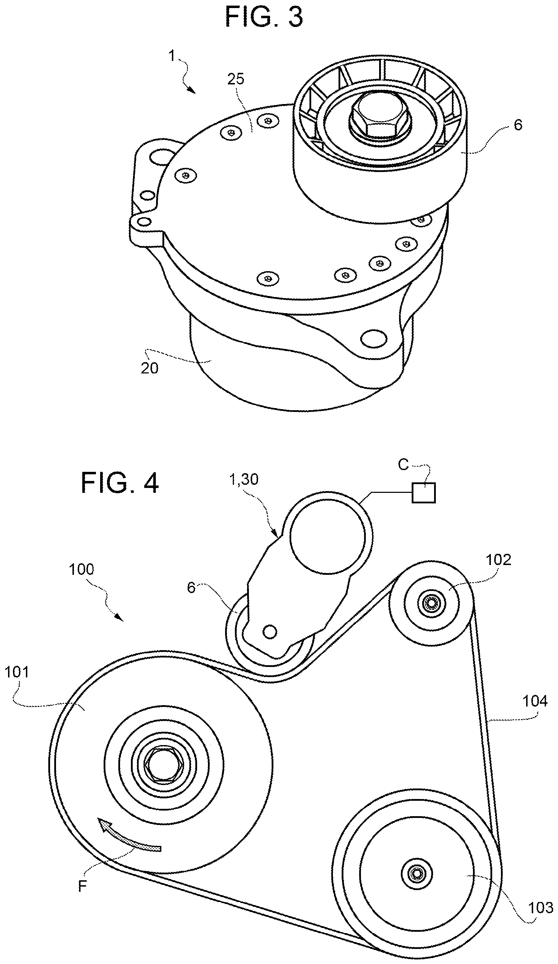

In use, the tensioner 1 is assembled so that the pulley 6 contacts a loose branch L (Figure 4) of the belt drive when a pulley of the crank shaft P drives the accessories. When the pulley of the crank shaft P has to be started by means of a motor generator M (the drive rotation direction is illustrated by the arrow F in figure 4), an electronic control (not illustrated) controls rotation of the projections 11 to contact the abutments 17 so that the support 4 maintains the pulley 6 in a forward position in the direction of release of the spring 7, which corresponds to a belt tensioning action. In this configuration, the greater tension of the belt loads the spring 7 only in a limited manner and the projections 11 contact the respective abutments 17 to prevent retraction of the pulley 6 following the tension increase in the branch contacted by the pulley and/or to apply to the support 4 a torque additional to that of the spring 7. The angular position of the projections 11 is maintained by opposing the retraction action by the pulley 6 even when the motor 8 is not energised since the gear 9 is irreversible, i.e. a torque applied to the rotating ring 16 does not generate a rotation of the sun gear 12. In particular, the motor 8 and the reduction gear 9, acting on the support 4 in parallel with the spring 7, are sized so that a load additional to that of the spring can be applied on the belt.

Furthermore, again during the start-up phase, the spring 7 can promptly take up temporary slacks in the belt due to extremely irregular loads and, correspondingly, the thrust element 10 can advance farther and then angularly lock the support 4 by means of the irreversible gear 9 when the belt tension increases again. In this way, the motor 8 is sized to apply a load that corresponds to a high but not maximum tension of the belt during start-up. The maximum tension is reached thanks to the irregularity of the loads applied to the belt during start-up. If necessary, said load is reached in successive stages with an increase every time the structure 4 rotates and overrides the thrust element 10 to recover a slack in the belt and the motor 8 operates the thrust element 10 to follow said rotation. Furthermore, the gear 9 is irreversible and therefore when the belt tension increases also to higher values of the maximum torque applicable by the motor 8 to the support 4, the latter maintains its position until the sun gear 12 is given the command to retract the pulley 6 with respect to the belt.

When the belt drive is driven by the pulley of the crank shaft P, the projections 11 are rotated by means of the motor 8 to define an angular distance from the respective abutments such as to allow a retraction of the pulley 6 greater than the one permitted when the internal combustion engine is started. In this way the support 4 can oscillate angularly in a substantially free manner.

In both the operating conditions and relative transients, the tensioning torque acting on the support 4 is always active so that a forward movement of the pulley 6 is not obstructed by the projections 11 which therefore act as a simple support and/or apply a thrust. The support 4 can therefore not be blocked angularly in two directions but only in one direction and in a manner depending on the angular position of the projections 11. In particular, the support 4 can be blocked by the projections 11 in the direction of rotation which tends to release the spring 7.

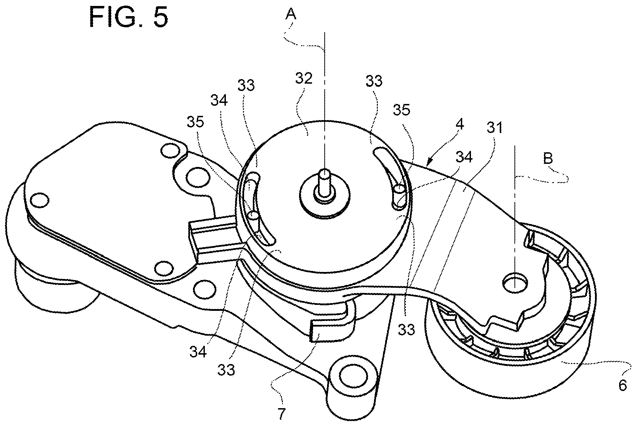

According to a further embodiment of the present invention illustrated in figure 5, a tensioner 30 is now described; the reference numbers used above will be used for components that are identical or functionally the same with respect to the description of the preceding paragraphs. Furthermore, the tensioner 30 differs from the tensioner 1 only in the aspects specified below.

The tensioner 30 comprises a support 4 having an arm 31 to space the axis B of the pulley 6 with respect to the axis A. Furthermore, the spring 7 is a spiral spring, i.e. a spring with rectangular transverse section having a variable curvature, for example to produce an Archimedes' spiral.

The rotating ring 16 is rigidly connected to a disc 32 which axially closes the structure 4 on the body 2. Therefore, the structure 4 can rotate angularly with respect to the disc 32 which is moved by means of the motor 8 (not illustrated in the figure).

Furthermore, the disc 32 defines the stop element 10 and comprises a plurality of stops 33 which, in pairs, define respective grooves 34. The structure 4 furthermore comprises pins 35 each of which engages in a groove 34.

In use, when the pulley 6 has to be locked in a forward direction, the disc 32 is operated to rotate so that the stops 33 contact the pins 35, thus the arm 31 can rotate only to advance the position of the pulley 6.

The advantages of the tensioners 1, 30 previously described are the following.

By means of a rotary motor and a gear mounted radially internal to the spring 7 it is possible to obtain a compact configuration of the tensioner and maximum reliability of the transmission of movement since all the moving parts, and in particular the gear, can be protected by the body of the tensioner.

When the gear 9 is irreversible, the position of the projections 11, stop 31 is maintained also without the motor 8 being energised or it is possible to maintain tensions of the belt greater than those that can be obtained by applying the maximum torque to the motor 8. The dimensions of the latter can therefore be optimised and in particular reduced.

When the thrust element 10 is configured to selectively contact the support 4 and apply a load to the latter in parallel to the spring 7, it is possible to obtain a tensioner able to apply very high tensions to the belt, in particular due to the action of the motor 8. The spring 7 can thus be sized for operating conditions where the belt tension is lower.

The support 4 surrounds the gear 9 so as to define an at least partial protection for the latter. In the embodiment of figure 1 the wall 25 defines a protection both in the radial direction and in the axial direction. In the embodiment of figure 4 the structure 4 radially protects the gear 9 and the disc 33 axially protects the gear 9 in addition to defining the thrust element 10 by means of the stops 33.

Lastly, it is clear that modifications or variations can be made to the tensioners described and illustrated here without departing from the protective scope as defined by the attached claims.

An electronic control device of the motor 8 can also be provided on board the tensioner 1. In this way it is possible to mount the tensioner 1, 30 in a belt drive without reprogramming the internal combustion engine control unit. This can be advantageous when the tensioner 1, 30 is mounted on motors controlled by pre-programmed control units.

When the tensioner 1, 30 is mounted on standard drives, i.e. in which starting of the internal combustion engine is controlled by means of an electric motor not connected to the accessory drive, it can be configured to control also the load of the spring 7. In this case the thrust element 10 is connected to the spring 7 to apply a torque to the latter and modify the pre-load thereof. The thrust element 10 can be rigidly connected or define a stop in one direction with the spring 7. Furthermore, the gear 9 can have the rotating ring 16 axially interposed between the outer ring 14 and the motor 8. In this way it is possible to connect the rotating ring 16 to the spring 7. The end portion of the spring 7 adjacent to the base flange 23 can thus be connected to the support 4.

## Claims

1. A belt tensioner (1, 30) comprising a body (2) defining a first axis (A), a support (4) rotating about said first axis (A), a pulley (6) carried by said support (4), rotating idle about a second axis (B) spaced from the fist axis (A) and configured to contact a belt of an accessory drive, a spring (7) to apply a torque to said support (4) and tension said belt, and **characterized by** a rotary motor (8) and a gear (9) to control a thrust element (10) to selectively contact the support (4), said spring (7) surrounding said motor (8), said thrust element (10) being operable by said rotary motor (8) to limit the maximum angular displacement of the support (4) in the direction of loading of the spring (7) and/or apply an additional torque to the support (4) in addition to said torque applied by said spring (7).

2. The tensioner according to claim 1, **characterized in that** said gear (9) is irreversible.

3. The tensioner according to claim 2, **characterized in that** said gear (9) is planetary and has an outer ring (14) connected rigidly to said support (4).

4. The tensioner according to claim 3, **characterized in that** said gear (9) comprises a further outer ring (16) rotatable with respect to said outer ring (14) and with respect to said support (4) about said first axis (A).

5. The tensioner according to any one of the preceding claims, **characterized in that** said body (2) comprises a cylindrical wall (21) and **in that** said motor (8) is housed in said cylindrical wall (21).

6. The tensioner according to claim 5, **characterized in that** said support (4) is radially supported by a wall (20) and **in that** said cylindrical wall (21) is radially inside said wall (20) .

7. The tensioner according to any one of the preceding claims, **characterized in that** said support (4) surrounds said gear (9) .

8. The tensioner according to any one of the preceding claims, **characterized in that** said spring (7) and said rotary motor (8) are on the same axial side with respect to said gear (9).

## Patentansprüche

1. Riemenspanner (1, 30), Folgendes umfassend: einen Hauptteil (2), der eine erste Achse (A) definiert, einen Träger (4), der sich um die erste Achse (A) dreht, eine Riemenscheibe (6), die vom Träger (4) getragen wird, die um eine zweite Achse (B) frei dreht, die einen Abstand von der ersten Achse (A) hat, und die dafür eingerichtet ist, in Kontakt mit einem Riemen eines Nebenaggregatantriebs zu sein, eine Feder (7), um auf den Träger (4) ein Drehmoment auszuüben und den Riemen zu spannen,
und durch Folgendes gekennzeichnet:
einen rotativen Motor (8) und ein Getriebe (9) zur Steuerung eines Schubelements (10), um selektiv mit dem Träger (4) in Kontakt zu sein, wobei die Feder (7) den Motor (8) umgibt und wobei das Schubelement (10) durch den rotativen Motor (8) betreibbar ist, um die maximale Winkelverstellung des Trägers (4) in der Spannrichtung der Feder (7) zu begrenzen, und/oder zusätzlich zu dem durch die Feder (7) ausgeübten Drehmoment ein zusätzliches Drehmoment auf den Träger (4) anzuwenden.

2. Spannvorrichtung nach Anspruch 1, **dadurch gekennzeichnet, dass** das Getriebe (9) irreversibel ist.

3. Spannvorrichtung nach Anspruch 2, **dadurch gekennzeichnet, dass** das Getriebe (9) planetarisch ist und einen äußeren Ring (14) hat, der starr mit dem Träger (4) verbunden ist.

4. Spannvorrichtung nach Anspruch 3, **dadurch gekennzeichnet, dass** das Getriebe (9) einen weiteren äußeren Ring (16) umfasst, der relativ zu dem äußeren Ring (14) und relativ zum Träger (4) um die erste Achse (A) drehbar ist.

5. Spannvorrichtung nach einem der vorhergehenden Ansprüche, **dadurch gekennzeichnet, dass** der Hauptteil (2) eine zylindrische Wand (21) umfasst, und dadurch, dass der Motor (8) in der zylindrischen Wand (21) untergebracht ist.

6. Spannvorrichtung nach Anspruch 5, **dadurch gekennzeichnet, dass** der Träger (4) radial von einer Wand (20) getragen wird, und dadurch, dass die zylindrische Wand (21) radial innerhalb der Wand (20) angeordnet ist.

7. Spannvorrichtung nach einem der vorhergehenden Ansprüche, **dadurch gekennzeichnet, dass** der Träger (4) das Getriebe (9) umgibt.

8. Spannvorrichtung nach einem der vorhergehenden Ansprüche, **dadurch gekennzeichnet, dass** die Feder (7) und der rotativen Motor (8) sich auf derselben Axialseite in Bezug auf das Getriebe (9) befinden.

## Revendications

1. Tendeur de courroie (1, 30) comprenant un corps (2) définissant un premier axe (A), un support (4) tournant autour dudit premier axe (A), une poulie (6) portée par ledit support (4), tournant au repos autour d'un second axe (B) espacé du premier axe (A) et configurée pour toucher une courroie d'un entraînement d'accessoire, un ressort (7) pour appliquer un couple audit support (4) et tendre ladite courroie, et **caractérisé par**
un moteur rotatif (8) et un engrenage (9) pour commander un élément de poussée (10) pour toucher sélectivement le support (4), ledit ressort (7) entourant ledit moteur (8), ledit élément de poussée (10) étant actionnable par ledit moteur rotatif (8) pour limiter le déplacement angulaire maximum du support (4) dans la direction de chargement du ressort (7) et/ou appliquer un couple supplémentaire au support (4) outre ledit couple appliqué par ledit ressort (7).

2. Tendeur selon la revendication 1, **caractérisé en ce que** ledit engrenage (9) est irréversible.

3. Tendeur selon la revendication 2, **caractérisé en ce que** ledit engrenage (9) est planétaire et présente un anneau extérieur (14) raccordé rigidement audit support (4).

4. Tendeur selon la revendication 3, **caractérisé en ce que** ledit engrenage (9) comprend un autre anneau extérieur (16) rotatif par rapport audit anneau extérieur (14) et par rapport audit support (4) autour dudit premier axe (A).

5. Tendeur selon l'une quelconque des revendications précédentes, **caractérisé en ce que** ledit corps (2) comprend une paroi cylindrique (21) et **en ce que** ledit moteur (8) est logé dans ladite paroi cylindrique (21).

6. Tendeur selon la revendication 5, **caractérisé en ce que** ledit support (4) est supporté radialement par une paroi (20) et **en ce que** ladite paroi cylindrique (21) est radialement dans ladite paroi (20).

7. Tendeur selon l'une quelconque des revendications précédentes, **caractérisé en ce que** ledit support (4) entoure ledit engrenage (9).

8. Tendeur selon l'une quelconque des revendications précédentes, **caractérisé en ce que** ledit ressort (7) et ledit moteur rotatif (8) sont sur le même côté axial par rapport audit engrenage (9).
